# EUROPEAN PATENT SPECIFICATION

(11) **EP 1 587 036 B1**
(45) Date of publication and mention of the grant of the patent: **02.12.2015**
(21) Application number: 05425099.8
(22) Date of filing: 25.02.2005
(51) Int. Cl.: G07C 5/08, G07C 9/00, B60R 25/00, G06Q 30/06

(54) **Device for recording drive and journey data of motor vehicles**
Vorrichtung zur Aufzeichnung von Fahr- und Reisedaten von Kraftfahrzeugen
Appareil pour enregistrer des données relatives à la conduite et aux déplacements de véhicules automobiles

(30) Priority: 01.03.2004 IT RM20040106
(43) Date of publication of application: 19.10.2005
(73) Proprietor: Associated Consulting S.r.l., 00040 Rocca Priora (RM) (IT)
(72) Inventor: Tommasi, Marcello, 00189 Rome (IT)
(74) Representative: Di Gregorio, Marco

(56) References cited:
- EP-A- 0 784 139
- EP-A- 0 976 626
- EP-A- 1 081 001
- EP-A- 1 484 463
- WO-A-97/13208
- WO-A-2004/025576
- WO-A-2004/029774
- DE-A1- 4 324 762
- US-A- 5 046 007

## Description

### The invention in general terms

The invention has the purpose of providing devices capable of recording into non-volatile electronic memories respectively associated to Vehicles and Drivers, data regarding journeys driven by various drivers on various vehicles. The recorded data will be aggregated by "drive periods", a single "drive period" being the time interval corresponding to a single trip, identified by the switching on and off of the vehicle engine.

The electronic memories associated to Drivers shall be implemented as removable units while the electronic memories associated to Vehicles may eithfer be part of the device itself or be a removable unit as well.

For each drive period the device will record and save to the Vehicle and to the Driver electronic memories the start time and duration of the trip, the vehicle and driver identities and the overall distance driven. The device will also record and save on both memories either the overall time driven at speeds within pre-defined speed ranges (e.g. 5 predefined speed ranges) or the distance driven and the vehicle geographical position at the end of consecutive time intervals (e.g. 60 seconds time intervals) during the same drive period. In the latter case the vehicle geographical position shall be provided by an external source by means of an input signal.

The data recorded in the removable DRK memory could be made available for further processing by inserting the same Driver Key DRK into an appropriate reader connected to a Personal Computer. The data recorded in the vehicle electronic memory VHK could be downloaded from the VHK memory to a removable download key and then could be made available for further processing by inserting this download key into an appropriate reader connected to a Personal Computer, being the reader and the PC not part of the present invention. The data stored by the device into the VHK and DRK electronic memories are saved in data records each containing a "security code" which will prevent any tampering action on the data.

The invention regards a device capable of being installed on various types of vehicles which is capable of collecting from the vehicle itself and from appropriate external units all the relevant drive data and of recording such data into the non-volatile electronic memories respectively associated to Vehicles and Drivers according to the above described philosophy

The device will be capable of reading the driver identity data contained in the removable memory associated to the driver and to determine whether the driver may be authorized to drive the specific vehicle where the device is installed. The above decision shall be based on the analysis of the driver data stored inside his/her own removable memory (also identified as Driver Key - DRK) compared with the vehicle data stored inside its own memory (also identified as Vehicle Key - VHK). Should the decision lead not to authorize the Driver for the specific Vehicle, the device shall issue a visual (RED light) and an electrical signal, denying the Driver from activating the Vehicle engine. Should the decision lead to authorize the Driver for the specific Vehicle, the device shall issue a visual (GREEN light) and an electrical signal, permitting the Driver to activate the Vehicle engine. Should the analysis of the Vehicle and the Driver data detect a situation requiring the "attention" of the Driver, the device shall issue a visual (YELLOW light) still permitting the Driver to activate the Vehicle engine.

Once an authorized Driver has activated the vehicle engine, the device will continuously monitor the Driver's activity and will continuously evaluate the driven distance and the current vehicle speed by appropriately processing the electrical pulses coming from an external odometer. The device will also continuously monitor the vehicle geographical location by receiving and saving the geographical coordinates coming from an external GPS receiver. The device will save at regular intervals into the two electronic non-volatile memories associated with the Vehicle and the Driver, the data about the driven distances, the corresponding time intervals and the current geographical position of the vehicle.

Each time e new data is written into one of the electronic non-volatile memories the device will calculate and save together with the written data also an appropriate "security code" which will prevent any possible tampering action on the stored data.

The device will incorporate a Real Time Clock unit with internal battery back-up which will be capable of providing current date and time data and which will keep its functionality even in case of relatively long periods of inactivity of the device. The device will also incorporate a manually activated micro-switch which, if activated, will force the device to execute a restart cycle.

### State of the art

At the current state of the art different types of devices are available on the market which are capable of continuously recording on electronic, magnetic or paper support the information about the driven time period and the vehicle speed and drive distances.

In particular most truck and heavy vehicles are normally equipped with tachimetric instruments capable of producing a paper circular diagram showing the current speed vs the current time. However such devices are mainly focused on the control and verification of the driving times and speed regulations for heavy load drivers and are non well suited for light private vehicles both from the cost and from the size point of view.

As far as we know, no device exist at the moment on the marker that is capable of recording both trip data plus driver and vehicle identities on non volatile memory units, that is capable of verifying the authorization of a Driver with respect to a specific vehicle and that is capable of recording the vehicle speed and the vehicle geographical positions in the way the invention is currently doing.

In particular the device which the invention refers to, has been conceived for low cost, large diffusion on lightweight vehicles as well as on heavy vehicles and is specifically aimed to the automatic documentation of the time periods driven by various drivers on various vehicles and on the documentation of the drivers behaviour as far as the driving speed is concerned.

Document DE 43 24 762 A1 discloses a car sharing system wherein each vehicle comprises a device for controlling access to the vehicle to an authorized user through the vehicle key and recording journey data in a memory of the device in relation to the authorized user for billing purposes. At the end of the travel, the device in the vehicle records the journey data in the vehicle key thereby allowing these data to be read by return of the vehicle key.

The device, consequently, may be classified as a new found that improves and broadens the functionalities of known devices and that introduces innovative solutions by means of a new combination of known techniques in order to get functionalities not otherwise achievable by known devices.

### Detailed description of currently preferred implementation solutions

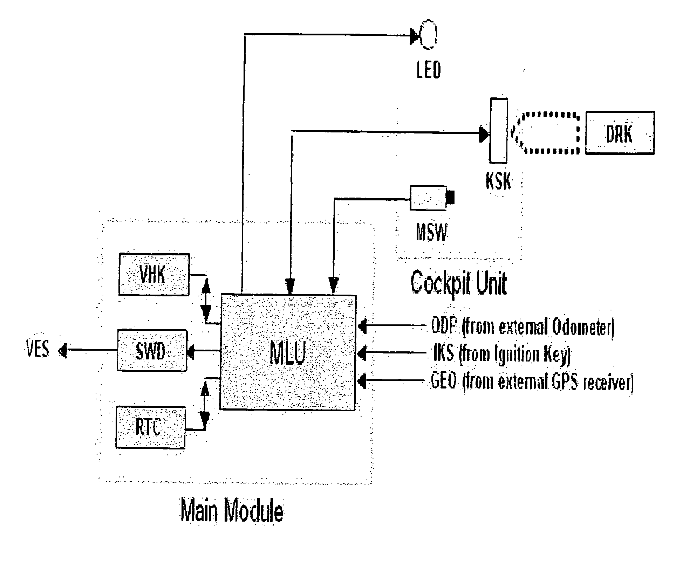

The invention is now described with reference to a specific implementation solution which is currently preferred, being this description reported as one of the possible examples of implementation, with no meaning whatsoever of limiting the application or the realization of the invention to the described solution and application. The invention is then described with reference to the implementation scheme described in Figure 1.

### Figure 1 - Device for recording drive and journey data of motor vehicles

1. MLU - Main Logical Unit, part of the Main Module performing the logical functions of the device.
2. VHK - Non volatile electronic memory Vehicle Key, part of the Main Module.
3. SWD - Switching Device, part of the Main Module; the SWD performs on/off switching of the electrical signal enabling the operation of the vehicle where the invented device is installed
4. RTC - Real Time Clock unit, part of the Main Module which continuously provides date and time information
5. ODP Signal - Pulse signal from external Odometer
6. IKS Siqnal - Electrical signal form the Ignition Key
7. GEO Signal - Geographic reference signal from external GPS receiver
8. VES Signal - Electrical signal that enables/disables the operation of the vehicle
9. KSK - Socket for the insertion of the Driver's Key, part of the Cockpit Module
10.LED - Multi-colour Light Emitting Diode, used by the MLU to indicate whether the Driver is authorized or not for driving the vehicle
11. MSW - Manual micro-switch used to reset the device if necessary

DRK - Non volatile removable electronic memory Driver Key; to be inserted into the Cockpit Module, by means of the KSK socket, to verify the Driver's authorization for driving the vehicle.

The above Figure describes the general operating principle of the "DEVICE FOR RECORDING DRIVE AND JOURNEY DATA OF MOTOR VEHICLES" which, according to the above figure and in the implementation solution which is currently preferred, is made of two distinct units named, respectively, "Main Module" and "Cockpit Module" mutually connected by a multi-wire cable. An alternative, also preferred, implementation solution will envisage a single "Unified Cockpit Module" which incorporates in itself all the functionalities of the two modules. Either one of the two solutions may be used for implementing the invention, depending on the preference of the final user and of the characteristics of the target application.

With reference to the above Figure, the operation of the device may be described as follows:

When the device is first installed on the vehicle, it shall be appropriately programmed as to store into the non volatile electronic memory VHK: i) a unique vehicle identity code" VC, ii) one or more "mode selection codes", iii) an "odometric constant" OC, iv) a unique "secret code" RV.

When Driver Keys DRKs are first generated, they shall be appropriately programmed as to store into their non volatile electronic memory: i) a unique driver identity code DC, ii) one or more "mode selection codes", iii) a unique "secret code" DV.

Special "Download Keys", mechanically similar to keys DRK, may be generated if necessary; they shall be programmed as to store into their non volatile electronic memory: i) a special "download code" RC which, at insertion, will be recognized by the device

Special "Upload Keys", mechanically similar to keys DRK, may be generated if necessary; they shall be programmed as to store into their non volatile electronic memory: i) a special "upload code" WC which, at insertion, will be recognized by the device, ii) the unique "vehicle code" VC of the vehicle the upload key is intended made for, iii) the "mode selection codes" for the target vehicle, iv) the "odometric constant" OC for the target vehicle, v) the unique "secret code" RV for the target vehicle.

At every "reset" of the device, which will occur both when either the electrical signal IGK or the micro-switch MSW are activated, MLU will be ready for recording the data of a new "drive interval". If no Driver Key is inserted into the Cockpit Module, MLU will activate the LED indicator with a RED flashing light and will activate the SWD switching device as to generate a "FALSE" Vehicle Enabling Signal VES. The above VES signal will inhibit the ignition of the vehicle engine and, consequently, will prevent the Driver from driving the vehicle.

If the Driver Key belonging to a not-authorized Driver is inserted into the Cockpit Module of the device, MLC will read the codes stored in the electronic memory and, after having recognized that the driver is not authorized, will activate the LED indicator with a RED light and will activate the SWD switching device as to generate a "FALSE" Vehicle Enabling Signal VES. The above VES signal will inhibit the ignition of the vehicle engine and, consequently, will prevent the Driver from driving the vehicle.

If the Driver Key belonging to an authorized Driver is inserted into the Cockpit Module of the device, MLC will read the codes stored in the electronic memory and, after having recognized that the driver is authorized, will activate the LED indicator with a GREEN light and will de-activate the SWD switching device as to generate a "TRUE" Vehicle Enabling Signal VES.

If a "Download Key" is inserted into the Cockpit Module of the device, MLC will read the codes stored in the electronic memory and, after having recognized the type of key, will shortly activate the LED indicator with a RED light, will activate the SWD switching device as to generate a "FALSE" Vehicle Enabling Signal VES and will transfer the entire content of the non volatile electronic memory VHK into the memory of the inserted key. At the end of the transfer process MLU will shortly activate the LED indicator with a GREEN light.

If an "Upload Key" is inserted into the Cockpit Module of the device, MLC will read the codes stored in the electronic memory and, after having recognized the type of key, will shortly activate the LED indicator with a RED light, will activate the SWD switching device as to generate a "FALSE" Vehicle Enabling Signal VES and will initialize the entire content of the non volatile electronic memory VHK with the data previously stored in the memory of the inserted upload key. At the end of the transfer process MLU will shortly activate the LED indicator with a GREEN light.

After a Driver Key belonging to an authorized Driver (inserted in the Cockpit Module) has been recognized, MLC will start recording new "drive records" both in the Vehicle electronic memory and in the DRK electronic memory: the "drive record" on the vehicle memory will be initialized by writing the Driver's identity code DC and the current date and time stamp while the "drive record" on the DRK memory will be initialized by writing the Vehicle's identity code VC and the current date and time stamp.

Every time a record is written on the vehicle non volatile memory, an "authentication code" VH will be calculated and written at the end of the record data by using the driver's secret code RD. Every time a record is written on the DRK non volatile memory, an "authentication code" DH will be calculated and written at the end of the record data by using the vehicle's secret code RV. The above authentication codes DH and VH will prevent possible tampering of the stored records.

MLU will continuously count and accumulate the "odometric pulses" received by means of the ODP signal. At the end of each 60 second time interval, MLU will evaluate the driven distance in km, by dividing the total number of ODP pulses by the "odometric constant" previously stored in the VHK electronic memory.

Every 60 seconds MLU will compare the number of received ODP pulses with the speed ranges previously stored in the vehicle memory (part of the "mode selection codes"). Once the driven speed has been classified into one of the defined speed ranges, the time counter corresponding to the speed range will be incremented by one.

Every T seconds (where T may be 60 seconds or 300 seconds or any other constant interval) MLU will update both the vehicle memory and the DRK memory. According to the selected operating mode the update will consist of the two alternatives described below.

As a first alternative the current record will be updated by over-writing: i) the difference in minutes between the current time and the time stamp originally in the record, ii) the total driven distance, iii) the minutes driven in each speed range, iv) the authentication codes DH and VH as appropriate.

As a second alternative the current record will be updated by appending: i) the driven distance during the last time interval, ii) the current vehicle position (Lat and Long coordinates), iii) the authentication codes DH and VH as appropriate.

As a third alternative the current record will be updated by appending: i) the driven distance during the last time interval, ii) the difference between the current vehicle position (Lat and Long coordinates) and the first position in the record, iii) the authentication codes DH and VH as appropriate.

As a fourth alternative the current record will be updated by appending: i) the driven distance during the last time interval, ii) the authentication codes DH and VH as appropriate.

If the current Driver Key DRK is removed from the Cockpit Module, the data recording will be stopped and MLU will activate the LED indicator with a RED flashing light and will activate the SWD switching device as to generate a "FALSE" Vehicle Enabling Signal VES.

If the lgnition Key Signal is switched off (being the driver Key DRK still inserted in the Cockpit Module) the data recording will be stopped and MLU will activate the LED indicator with a RED flashing light and will activate the SWD switch-ing device as to generate a "FALSE" Vehicle Enabling Signal VES.

In the currently preferred implementation solution the "Main Module" will be realized as to be easily installed inside the engine hood whereas the "Cockpit Module" will be realized as to be easily installed in the inside of the vehicle within reach of the driver and being the two Modules interconnected by means of a multi-wire cable terminated by plugs which will mate corresponding sockets provided on the two Modules.

In a second preferred implementation solution the functions currently envisaged for the "Main Module" and for the "Cockpit Module" are performed by a single "Combined Cockpit Module".

In a third preferred implementation solution the "Main Module" will be realized as to be easily installed inside the engine hood whereas the "Cockpit Module" will be realized as to be easily installed in the inside of the vehicle within reach of the driver and being the two Modules interconnected by means of a wireless communication link, where the above link may be realized by means of a radio frequency link or by means of an infrared optical link.

## Claims

1. Device for recording drive and journey data of motor vehicles, composed of a Main Logical Unit MLU, a Key Socket (KSK), a non volatile electronic memory named Vehicle Key VHK, a Real Time Clock (RTC), a Microswitch (MSW), a Switching Device (SWD), a multi-colour LED indicator and a removable non volatile electronic memory named Driver Key DRK, wherein the above Main Logical Unit MLU reads, through the Key Socket (KSK), the removable electronic memory Driver Key DRK, compares the content of the above DRK with the content of the electronic memory Vehicle Key VHK, the above MLU being capable, according to the result of such comparison, of activating both the Switching Device (SWD), and the multi-colour LED indicator showing the result of the comparison and where the Switching Device (SWD) generates an electric signal VES enabling the operation of the vehicle, the above MLU being capabte of reading an external Odometric Pulse Signal (OPS) generated by an external odometer and to transform such OPS pulses into the corresponding travelled distance and speed, the above MLU being capable of reading the status of the Microswitch (MSW) and, according to its status, of executing a restart function, the above MLU being capable of recording onto the above DRK the unique identity code of the vehicle and onto the above VHK the unique identity code of the driver as it is read from the currently inserted DRK, the above MLU being capable of reading from the above Real Time Clock (RTC) the current date and time, such MLU being capable of detecting when the DRK key was inserted and extracted and capable of detecting the activation and dis-activation of the external Car Ignition Key by reading the corresponding Ignition Key Signal IKS, such MLU being capable of simultaneously recording on both electronic memories DRK and VHK the date and time data corresponding to the instants when the DRK key was respectively inserted and extracted or the instants when the IKS was respectively activated or dis-activated, the above MLU being capable of simultaneously recording on both electronic memories DRK and VHK either the overall distance travelled in a driving period or the distances travelled and the current geographic position of the vehicle at the end of consecutive time intervals of predefined duration T, whereas the geographical position data are received by MLU as a GEO serial data signal from an external GPS device, such MLU being capable of recording the above data on both electronic memories DRK and VHK together with a security check code able to prevent tampering of the recorded data, and the above MLU being capable of recognizing some specially coded DRK keys and being capable of reacting to the insertion of such keys either by uploading the current content of the DRK key into selected areas of the VHK memory, or by downloading the content of pre-selected areas of the VHK memory into corresponding areas of the DRK memory, according to the specific coding of the inserted keys.

2. Device for recording drive and journey data of motor vehicles as per CLAIM 1, **CHARACTERIZED BY** being composed of a "Main Module" and of a "Cockpit Module", the two above Modules being interconcected by means of a multi-wire cable, the Main Module being made in a case suitable for installation in the hood of a motor vehicle and the Cockpit Module being made in a case suitable for installation in the inside of a motor vehicle.

3. Device for recording drive and journey data of motor vehicles as per CLAIM 1, **CHARACTERIZED BY** the fact that the removable memory module named Driver Key DRK is implemented by means of a solid state electrically alterable electronic memory, the read and write electrical signals being provided to such removable memory module through the electrical contacts between the removable module itself and the KSK socket of the device.

4. Device for recording drive and journey data of motor vehicles as per CLAIM 1, **CHARACTERIZED BY** the fact that the removable memory module named Driver Key DRK is implemented by means of a solid state electrically alterable electronic memory, the read and write commands being provided to the removable memory module through the wireless transmission of electromagnetic energy by means of electromagnetic coupling between the device and the removable memory module.

5. Device for recording drive and journey data of motor vehicles as per CLAIM 1, **CHARACTERIZED BY** the fact that the same removable memory module is used both as Driver Key and for uploading the preset values and parameters into the VHK memory of the device.

6. Device for recording drive and journey data of motor vehicles as per CLAIM 1, **CHARACTERIZED BY** the fact that driven distances and driven speeds are calculated by dividing the total number of odometric pulses generated by the motion of the vehicle by appropriate odometric constants, such odometric constants being typical of each type of vehicle, stored in the VHK memory.

7. Device for recording drive and journey data of motor vehicles as per CLAIM 1, **CHARACTERIZED BY** the fact that drive records corresponding to drive periods contain driver identification code, start date and time stamp, drive period duration, total driven distance, and total time driven at speeds in predetermined speed ranges, the above records being stored into the vehicle VHK memory.

8. Device for recording drive and journey data of motor vehicles as per CLAIM 1, **CHARACTERIZED BY** the fact that drive records corresponding to drive periods contain driver identification code, start date and time stamp, drive period duration, total driven distance, and total time driven at speeds in predetermined speed ranges, the above records being stored into the vehicle into the driver DRK memory.

9. Device for recording drive and journey data of motor vehicles as per CLAIM 1, **CHARACTERIZED BY** the fact that drive records corresponding to drive periods contain driver identification code, start date and time stamp, a series of sub-records containing the distances driven during equal, consecutive time intervals till the end of the drive period, the above records being stored into the vehicle VHK memory.

10. Device for recording drive and journey data of motor vehicles as per CLAIM 1, **CHARACTERIZED BY** the fact that drive records corresponding to drive periods contain driver identification code, start date and time stamp, a series of sub-records containing the distances driven during equal, consecutive time intervals till the end of the drive period, the above records being stored into the driver DRK memory.

11. Device for recording drive and journey data of motor vehicles as per CLAIM 1, **CHARACTERIZED BY** the fact that drive records corresponding to drive periods contain driver identifcation code, start date and time stamp, initial position of the vehicle expressed as geographical coordinates, a series of sub-records containing the geographical coordinates and the distances driven during equal, consecutive time intervals till the end of the drive period, the above records being stored into the vehicle VHK memory and such geographical coordinates being supplied by an external device

12. Device for recording drive and journey data of motor vehicles as per CLAIM 1, **CHARACTERIZED BY** the fact that drive records corresponding to drive periods contain driver identification code, start date and time stamp, initial position of the vehicle expressed as geographical coordinates, a series of sub-records containing the geographical coordinates and the distances driven during equal, consecutive time intervals till the end of the drive period, the above records being stored into the driver DRK memory and such geographical coordinates being supplied by an external device.

13. Device for recording drive and journey data of motor vehicles as per CLAIM 1, **CHARACTERIZED BY** protecting the records stored into the vehicle VHK memory against possible tampering by providing, for each record, an authentication check code generated by means of a unique secret code stored inside the driver DRK memory.

14. Device for recording drive and journey data of motor vehicles as per CLAIM 1, **CHARACTERIZED BY** protecting the records stored into the driver DRK memory against possible tampering by providing, for each record, an authentication check code generated by means of a unique secret code stored inside the vehicle VHK memory.

15. Device for recording drive and journey data of motor vehicles as per CLAIM 1, **CHARACTERIZED BY** the fact that vehicle operation is enabled or disabled by the bit-by-bit comparison of two corresponding codes, the former contained in the vehicle VHK memory, the latter in the driver DRK memory, and vehicle operation being enabled only if common active bits exist in the two compared codes.

16. Device for recording drive and journey data of motor vehicles as per CLAIM 1, **CHARACTERIZED BY** the fact that vehicle operation is disabled if the driver code contained in the driver DRK memory belongs to a black-list of codes contained inside the vehicle VHK memory.

17. Device for recording drive and journey data of motor vehicles as per CLAIM 1, **CHARACTERIZED BY** the fact that, in an alternate implementation solution, the functions of the two Modules, namely Main Module and Cockpit Module, are combined into one module.

18. Device for recording drive and journey data of motor vehicles as per CLAIM 1, **CHARACTERIZED BY** the fact that, in an alternate implementation solution, the functions of the Cockpit Module are performed by a module which exchanges data with the Main Module by means of a wireless connection, such connection being implemented by means of a radio frequency link.

19. Device for recording drive and journey data of motor vehicles as per CLAIM 1, **CHARACTERIZED BY** the fact that, in an alternate implementation solution, the functions of the Cockpit Module are performed by a module which exchanges data with the Main Module by means of a wireless connection, such connection being implemented by means of an optical link.

## Patentansprüche

1. Vorrichtung zum Aufzeichnen von Fahr- und Reisedaten von Kraftfahrzeugen, die aus einer logischen Haupteinheit MLU, einer Schlüsselbuchse (KSK), einem nichtflüchtigen elektronischen Speicher, genannt Fahrzeugschlüssel VHK, einem Echtzeitgeber (RTC), einem Mikroschalter (MSW), einer Schaltvorrichtung (SWD), einem mehrfarbigen LED-Indikator und einem entfernbaren nichtflüchtigen elektronischen Speicher, genannt Fahrerschlüssel DRK, zusammengesetzt ist, wobei die obige logische Haupteinheit MLU mittels der Schlüsselbuchse (KSK) den entfernbaren elektronischen Speicherfahrerschlüssel DRK liest, den Inhalt des obigen DRK mit dem Inhalt des elektronischen Speicherfahrzeugschlüssels VHK vergleicht, wobei die obige MLU gemäß dem Ergebnis eines solchen Vergleichs sowohl die Schaltvorrichtung (SWD) als auch den mehrfarbigen LED-Indikator, der das Ergebnis des Vergleichs zeigt, aktivieren kann und wobei die Schaltvorrichtung (SWD) ein elektrisches Signal VES erzeugt, das den Betrieb des Fahrzeugs ermöglicht, wobei die obige MLU ein externes odometrisches Impulssignal (OPS), das durch einen externen Odometer erzeugt wird, lesen und solche OPS-Impulse in die entsprechende zurückgelegte Distanz und Geschwindigkeit transformieren kann und die obige MLU den Status des Mikroschalters (MSW) lesen und gemäß seinem Status eine Neustartfunktion ausführen kann, wobei die obige MLU den eindeutigen Identitätscode des Fahrzeugs auf dem obigen DRK aufzeichnen kann, und auf den obigen VHK den eindeutigen Identitätscode des Fahrers, sowie er aus dem aktuell eingefügten DRK gelesen wird, und die obige MLU aus dem obigen Echtzeitgeber (RTC) das aktuelle Datum und die aktuelle Uhrzeit lesen kann und eine solche MLU detektieren kann, wann der DRK-Schlüssel eingefügt und entnommen wurde, und die Aktivierung und Deaktivierung des externen Autozündschlüssels detektieren kann, indem sie das entsprechende Zündschlüsselsignal IKS liest, wobei eine solche MLU gleichzeitig auf beiden elektronischen Speichern DRK und VHK die Datum- und Uhrzeitdaten aufzeichnen kann, die den Momenten entsprechen, an denen der DRK-Schlüssel eingefügt bzw. entnommen wurde, oder den Momenten, an denen das IKS aktiviert bzw. deaktiviert wurde, wobei die obige MLU gleichzeitig auf beiden elektronischen Speichern DRK und VHK entweder die in einer Fahrperiode zurückgelegte Gesamtdistanz oder die zurückgelegten Distanzen und die aktuelle geografische Position des Fahrzeugs am Ende aufeinanderfolgender Zeitintervalle vordefinierter Dauer T aufzeichnen kann, wohingegen die geografischen Positionsdaten durch die MLU als ein serielles GEO-Datensignal von einer externen GPS-Vorrichtung empfangen werden, wobei eine solche MLU die obigen Daten auf beiden elektronischen Speichern DRK und VHK zusammen mit einem Sicherheitsprüfcode aufzeichnen kann, der Manipulation der aufgezeichneten Daten verhindern kann, und wobei die obige MLU gewisse speziell codierte DRK-Schlüssel erkennen kann und gemäß der spezifischen Codierung der eingefügten Schlüssel auf die Einfügung solcher Schlüssel reagieren kann, indem entweder der aktuelle Inhalt des DRK-Schlüssels in ausgewählte Bereiche des VHK-Speichers hochgeladen wird oder indem der Inhalt vorausgewählter Bereiche des VHK-Speichers in entsprechende Bereiche des DRK-Speichers heruntergeladen werden.

2. Vorrichtung zum Aufzeichnen von Fahr- und Reisedaten von Kraftfahrzeugen nach Anspruch 1, **dadurch gekennzeichnet, dass** sie aus einem "Hauptmodul" und einem "Cockpitmodul" zusammengesetzt ist, wobei die zwei obigen Module mittels eines Mehrfachkabels verbunden sind, das Hauptmodul in einem für Installation in der Haube eines Kraftfahrzeugs geeigneten Gehäuse hergestellt ist und das Cockpitmodul in einem für Installation im Inneren eines Kraftfahrzeugs geeigneten Gehäuse hergestellt ist.

3. Vorrichtung zum Aufzeichnen von Fahr- und Reisedaten von Kraftfahrzeugen nach Anspruch 1, **gekennzeichnet durch** den Umstand, dass das entfernbare Speichermodul, genannt Fahrerschlüssel DRK, mittels eines elektrisch änderbaren elektronischen Halbleiterspeichers implementiert wird und die elektrischen Lese- und Schreibsignale einem solchen entfernbaren Speichermodul mittels der elektrischen Kontakte zwischen dem entfernbaren Modul selbst und der KSK-Buchse der Vorrichtung zugeführt werden.

4. Vorrichtung zum Aufzeichnen von Fahr- und Reisedaten von Kraftfahrzeugen nach Anspruch 1, **gekennzeichnet durch** den Umstand, dass das entfernbare Speichermodul, genannt Fahrerschlüssel DRK, mittels eines elektrisch änderbaren elektronischen Halbleiterspeichers implementiert wird, wobei die Lese- und Schreibbefehle dem entfernbaren Speichermodul mittels drahtloser Übertragung elektromagnetischer Energie mittels elektromagnetischer Kopplung zwischen der Vorrichtung und dem entfernbaren Speichermodul zugeführt werden.

5. Vorrichtung zum Aufzeichnen von Fahr- und Reisedaten von Kraftfahrzeugen nach Anspruch 1, **gekennzeichnet durch** den Umstand, dass das selbe entfernbare Speichermodul sowohl als Fahrerschlüssel als auch zum Hochladen der voreingestellten Werte und Parameter in den VHK-Speicher der Vorrichtung verwendet wird.

6. Vorrichtung zum Aufzeichnen von Fahr- und Reisedaten von Kraftfahrzeugen nach Anspruch 1, **gekennzeichnet durch** den Umstand, dass gefahrene Distanzen und gefahrene Geschwindigkeiten berechnet werden **durch** Dividieren der Gesamtzahl **durch** die Bewegung des Fahrzeugs erzeugter odometrischer Impulse durch geeignete odometrische Konstanten, wobei solche odometrischen Konstanten für jede Art von Fahrzeug typisch und im VHK-Speicher gespeichert sind.

7. Vorrichtung zum Aufzeichnen von Fahr- und Reisedaten von Kraftfahrzeugen nach Anspruch 1, **gekennzeichnet durch** den Umstand, dass Fahraufzeichnungen, die Fahrperioden entsprechen, Fahreridentifikationscode, Startdatum und -Zeitstempel, Fahrperiodendauer, gesamte gefahrene Distanz und gesamte gefahrene Zeit mit Geschwindigkeiten in vorbestimmten Geschwindigkeitsbereichen enthalten, wobei die obigen Aufzeichnungen in dem Fahrzeug-VHK-Speicher gespeichert werden.

8. Vorrichtung zum Aufzeichnen von Fahr- und Reisedaten von Kraftfahrzeugen nach Anspruch 1, **gekennzeichnet durch** den Umstand, dass die Fahraufzeichnungen, die Fahrperioden entsprechen, Fahreridentifikationscode, Startdatum und -Zeitstempel, Fahrperiodendauer, gesamte gefahrene Distanz und gesamte gefahrene Zeit mit Geschwindigkeiten in vorbestimmten Geschwindigkeitsbereichen enthalten, wobei die obigen Aufzeichnungen im Fahrzeug im Fahrer-DRK-Speicher gespeichert werden.

9. Vorrichtung zum Aufzeichnen von Fahr- und Reisedaten von Kraftfahrzeugen nach Anspruch 1, **gekennzeichnet durch** den Umstand, dass die Fahraufzeichnungen, die Fahrperioden entsprechen, Fahreridentifikationscode, Startdatum und -Zeitstempel und eine Reihe von Unteraufzeichnungen enthalten, die die während gleicher aufeinanderfolgender Zeitintervalle bis zum Ende der Fahrperiode gefahrenen Distanzen enthalten, wobei die obigen Aufzeichnungen im Fahrzeug-VHK-Speicher gespeichert werden.

10. Vorrichtung zum Aufzeichnen von Fahr- und Reisedaten von Kraftfahrzeugen nach Anspruch 1, **gekennzeichnet durch** den Umstand, dass die Fahraufzeichnungen, die Fahrperioden entsprechen, Fahreridentifikationscode, Startdatum und -Zeitstempel und eine Reihe von Unteraufzeichnungen enthalten, die die während gleicher aufeinanderfolgender Zeitintervalle bis zum Ende der Fahrperiode gefahrenen Distanzen enthalten, wobei die obigen Aufzeichnungen im Fahrer-DRK-Speicher gespeichert werden.

11. Vorrichtung zum Aufzeichnen von Fahr- und Reisedaten von Kraftfahrzeugen nach Anspruch 1, **gekennzeichnet durch** den Umstand, dass Fahraufzeichnungen, die Fahrperioden entsprechen, Fahreridentifikationscode, Startdatum und -Zeitstempel, anfängliche Position des Fahrzeugs, ausgedrückt als geografische Koordinaten, und eine Reihe von Unteraufzeichnungen enthalten, die die geografischen Koordinaten und die während gleicher aufeinanderfolgender Zeitintervalle bis zum Ende der Fahrperiode gefahrenen Distanzen enthalten, wobei die obigen Aufzeichnungen im Fahrzeug-VHK-Speicher gespeichert werden und solche geografischen Koordinaten durch eine externe Vorrichtung geliefert werden.

12. Vorrichtung zum Aufzeichnen von Fahr- und Reisedaten von Kraftfahrzeugen nach Anspruch 1, **gekennzeichnet durch** den Umstand, dass Fahraufzeichnungen, die Fahrperioden entsprechen, Fahreridentifikationscode, Startdatum und -Zeitstempel, anfängliche Position des Fahrzeugs, ausgedrückt als geografische Koordinaten, und eine Reihe von Unteraufzeichnungen enthalten, die die geografischen Koordinaten und die während gleicher aufeinanderfolgender Zeitintervalle bis zum Ende der Fahrperiode gefahrenen Distanzen enthalten, wobei die obigen Aufzeichnungen im Fahrer-DRK-Speicher gespeichert werden und solche geografischen Koordinaten durch eine externe Vorrichtung geliefert werden.

13. Vorrichtung zum Aufzeichnen von Fahr- und Reisedaten von Kraftfahrzeugen nach Anspruch 1, **gekennzeichnet durch** Schützen der in dem Fahrzeug-VHK-Speicher gespeicherten Aufzeichnungen vor möglicher Manipulation, indem für jede Aufzeichnung ein Authentifizierungsprüfcode bereitgestellt wird, der mittels eines in dem Fahrer-DRK-Speicher gespeicherten eindeutigen Geheimcodes erzeugt wird.

14. Vorrichtung zum Aufzeichnen von Fahr- und Reisedaten von Kraftfahrzeugen nach Anspruch 1, **gekennzeichnet durch** Schützen der in dem Fahrzeug-DRK-Speicher gespeicherten Aufzeichnungen vor möglicher Manipulation, indem für jede Aufzeichnung ein Authentifizierungsprüfcode bereitgestellt wird, der mittels eines in dem Fahrzeug-VHK-Speicher gespeicherten eindeutigen Geheimcodes erzeugt wird.

15. Vorrichtung zum Aufzeichnen von Fahr- und Reisedaten von Kraftfahrzeugen nach Anspruch 1, **gekennzeichnet durch** den Umstand, dass Fahrzeugbetrieb durch bitweisen Vergleich zweier entsprechender Codes ermöglicht oder gesperrt wird, wobei ersterer in dem Fahrzeug-VHK-Speicher enthalten ist, letzerer in dem Fahrer-DRK-Speicher und der Fahrzeugbetrieb nur ermöglicht wird, wenn gemeinsame aktive Bit in den zwei verglichenen Codes existieren.

16. Vorrichtung zum Aufzeichnen von Fahr- und Reisedaten von Kraftfahrzeugen nach Anspruch 1, **gekennzeichnet durch** den Umstand, dass Fahrzeugbetrieb gesperrt wird, wenn der in dem Fahrer-DRK-Speicher enthaltene Fahrercode zu einer schwarzen Liste von Codes gehört, die in dem Fahrzeug-VHK-Speicher enthalten ist.

17. Vorrichtung zum Aufzeichnen von Fahr- und Reisedaten von Kraftfahrzeugen nach Anspruch 1, **gekennzeichnet durch** den Umstand, dass bei einer alternativen Implementierungslösung die Funktionen der zwei Module, nämlich des Hauptmoduls und des Cockpitmoduls, zu einem Modul kombiniert werden.

18. Vorrichtung zum Aufzeichnen von Fahr- und Reisedaten von Kraftfahrzeugen nach Anspruch 1, **gekennzeichnet durch** den Umstand, dass bei einer alternativen Implementierungslösung die Funktionen des Cockpitmoduls **durch** ein Modul ausgeführt werden, das mittels einer drahtlosen Verbindung Daten mit dem Hauptmodul austauscht, wobei eine solche Verbindung mittels einer Hochfrequenzverbindung implementiert wird.

19. Vorrichtung zum Aufzeichnen von Fahr- und Reisedaten von Kraftfahrzeugen nach Anspruch 1, **gekennzeichnet durch** den Umstand, dass bei einer alternativen Implementierungslösung die Funktionen des Cockpitmoduls **durch** ein Modul ausgeführt werden, das mittels einer drahtlosen Verbindung Daten mit dem Hauptmodul austauscht, wobei eine solche Verbindung mittels einer optischen Verbindung implementiert wird.

## Revendications

1. Dispositif destiné à enregistrer des données de conduite et de déplacement de véhicules motorisés, comprenant une unité logique principale MLU, une prise de clé (KSK), une mémoire électronique non volatile appelée clé de véhicule VHK, une horloge en temps réel (RTC), un microrupteur (MSW), un dispositif de commutation (SWD), un indicateur à LED multicolores et une mémoire électronique non volatile amovible appelée clé de conducteur DRK, dans lequel l'unité logique principale MLU, lit, par l'intermédiaire de la prise de clé (KSK), la clé de conducteur de mémoire électronique amovible DRK, compare le contenu de la DRK au contenu de la clé de véhicule de mémoire électronique VHK, la MLU étant capable, en fonction du résultat de la comparaison, d'activer à la fois le dispositif de commutation (SWD), et l'indicateur à LED multicolores indiquant le résultat de la comparaison et où le dispositif de commutation (SWD) génère un signal électrique VES permettant le fonctionnement du véhicule, la MLU étant capable de lire un signal d'impulsion d'odomètre (OPS) externe généré par un odomètre externe et de transformer des impulsions OPS en distance parcourue correspondante et en vitesse correspondante, la MLU étant capable de lire le statut du microrupteur (MSW), et, en fonction de son statut, d'exécuter une fonction de redémarrage, la MLU étant capable d'enregistrer, sur la DRK, le code d'identité unique du véhicule et, sur la VHK, le code d'identité unique du conducteur qui est lu à partir de la DRK actuellement insérée, la MLU étant capable de lire, à partir de l'horloge en temps réel (RTC), la date actuelle et l'heure actuelle, la MLU étant capable de détecter quand la clé DRK a été insérée et extraite et étant capable de détecter l'activation et la désactivation de la clé d'allumage de voiture externe en lisant le signal de clé d'allumage IKS, correspondant, la MLU étant capable d'enregistrer simultanément, sur les mémoires électroniques DRK et VHK, les données de date et d'heure correspondant aux instants auxquels la clé DRK a été respectivement insérée et extraite ou les instants auxquels l'IKS a été respectivement activé ou désactivé, la MLU étant capable d'enregistrer simultanément sur les deux mémoires électroniques DRK et VHK soit la distance totale parcourue au cours d'une période de conduite ou les distances parcourues et la position géographique actuelle du véhicule à la fin d'intervalles de temps consécutifs d'une durée T prédéfinie, les données de position géographique étant reçues par la MLU sous la forme d'un signal de données en série GEO provenant d'un dispositif GPS externe, la MLU étant capable d'enregistrer lesdites données sur les deux mémoires électroniques DRK et VHK avec un code de contrôle de sécurité apte à empêcher toute falsification des données enregistrées, et la MLU étant capable de reconnaître certaines clés DRK spécialement codées et étant capable de réagir à l'insertion de telles clés soit par chargement du contenu actuel de la clé DRK dans les zones sélectionnées de la mémoire VHK, soit par téléchargement du contenu de zones présélectionnées de la mémoire VHK dans des zones correspondantes de la mémoire DRK en fonction du codage spécifique des clés insérées.

2. Dispositif destiné à enregistrer des données de conduite et de déplacement de véhicules motorisés selon la revendication 1, **caractérisé en ce qu'**il comprend un module principal et un module de cockpit, les deux modules étant interconnectés au moyen d'un câble multifilaire, le module principal étant constitué d'un boîtier apte à être installé dans le capot d'un véhicule motorisé et le module de cockpit étant constitué d'un boîtier apte à être installé dans l'intérieur d'un véhicule motorisé.

3. Dispositif destiné à enregistrer des données de conduite et de déplacement de véhicules motorisés selon la revendication 1, **caractérisé par le fait que** le module de mémoire amovible appelé clé de conducteur DRK, est mis en oeuvre au moyen d'une mémoire électronique altérable électriquement à semi-conducteurs, les signaux électriques de lecture et d'écriture étant fournis au module de mémoire amovible par l'intermédiaire de contacts électriques entre le module amovible proprement dit et la prise KSK du dispositif.

4. Dispositif destiné à enregistrer des données de conduite et de déplacement de véhicules motorisés selon la revendication 1, **caractérisé par le fait que** le module de mémoire amovible appelé clé de conducteur DRK, est mis en oeuvre au moyen d'une mémoire électronique altérable électriquement à semi-conducteurs, les commandes de lecture et d'écriture étant fournies au module de mémoire amovible par l'intermédiaire de la transmission sans fil d'une énergie électronique au moyen d'un couplage électromagnétique entre le dispositif et le module de mémoire amovible.

5. Dispositif destiné à enregistrer des données de conduite et de déplacement de véhicules motorisés selon la revendication 1, **caractérisé par le fait que** le même module de mémoire amovible est utilisé à la fois en tant que clé de conducteur et pour charger les valeurs et paramètres préréglés dans la mémoire VHK du dispositif.

6. Dispositif destiné à enregistrer des données de conduite et de déplacement de véhicules motorisés selon la revendication 1, **caractérisé par le fait que** des distances parcourues et des vitesses de conduite sont calculées par la division du nombre total d'impulsions d'odomètre générées par le déplacement du véhicule par des constantes d'odomètre appropriées, les constantes d'odomètre étant typiques de chaque type de véhicule, mémorisées dans la mémoire VHK.

7. Dispositif destiné à enregistrer des données de conduite et de déplacement de véhicules motorisés selon la revendication 1, **caractérisé par le fait que** des enregistrements de conduite correspondant à des périodes de conduite contiennent un code d'identification de conducteur, un horodatage de date et d'heure de démarrage, une durée de période de conduite, une distance parcourue totale, et un temps total de conduite à des vitesses dans des plages de vitesses prédéterminées, les enregistrements étant mémorisés dans la mémoire VHK de véhicule.

8. Dispositif destiné à enregistrer des données de conduite et de déplacement de véhicules motorisés selon la revendication 1, **caractérisé par le fait que** des enregistrements de conduite correspondant à des périodes de conduite contiennent un code d'identification de conducteur, un horodatage de date et d'heure de démarrage, une durée de période de conduite, une distance parcourue totale et un temps total de conduite à des vitesses dans des plages de vitesses prédéterminées, les enregistrements étant mémorisés dans le véhicule dans la mémoire DRK de conducteur.

9. Dispositif destiné à enregistrer des données de conduite et de déplacement de véhicules motorisés selon la revendication 1, **caractérisé par le fait que** des enregistrements de conduite correspondant à des périodes de conduite contiennent un code d'identification de conducteur, un horodatage de date et d'heure de démarrage, une série de sous-enregistrements contenant les distances parcourues pendant des intervalles de temps consécutifs égaux jusqu'à la fin de la période de conduite, les enregistrements étant mémorisés dans la mémoire VHK de véhicule.

10. Dispositif destiné à enregistrer des données de conduite et de déplacement de véhicules motorisés selon la revendication 1, **caractérisé par le fait que** des enregistrements de conduite correspondant à des périodes de conduite contiennent un code d'identification de conducteur, un horodatage de date et d'heure de démarrage, une série de sous-enregistrements contenant les distances parcourues pendant des intervalles de temps consécutifs égaux jusqu'à la fin de la période de conduite, les enregistrements étant mémorisés dans la mémoire DRK de conducteur.

11. Dispositif destiné à enregistrer des données de conduite et de déplacement de véhicules motorisés selon la revendication 1, **caractérisé par le fait que** des enregistrements de conduite correspondant à des périodes de conduite contiennent un code d'identification de conducteur, un horodatage de date et d'heure de démarrage, une position initiale du véhicule exprimée sous forme de coordonnées géographiques, une série de sous-enregistrements contenant les coordonnées géographiques et les distances parcourues pendant des intervalles de temps consécutifs égaux jusqu'à la fin de la période de conduite, les enregistrements étant mémorisés dans la mémoire VHK de véhicule et les coordonnées géographiques étant fournies par un dispositif externe.

12. Dispositif destiné à enregistrer des données de conduite et de déplacement de véhicules motorisés selon la revendication 1, **caractérisé par le fait que** des enregistrements de conduite correspondant à des périodes de conduite contiennent un code d'identification de conducteur, un horodatage de date et d'heure de démarrage, une position initiale du véhicule exprimée sous forme de coordonnées géographiques, une série de sous-enregistrements contenant les coordonnées géographiques et les distances parcourues pendant des intervalles de temps consécutifs égaux jusqu'à la fin de la période de conduite, les enregistrements étant mémorisés dans la mémoire DRK de conducteur et les coordonnées géographiques étant fournies par un dispositif externe.

13. Dispositif destiné à enregistrer des données de conduite et de déplacement de véhicules motorisés selon la revendication 1, **caractérisé par** la protection des enregistrements mémorisés dans la mémoire VHK de véhicule contre toute falsification éventuelle par la fourniture, pour chaque enregistrement, d'un code de contrôle d'authentification généré au moyen d'un code secret unique mémorisé à l'intérieur de la mémoire DRK de conducteur.

14. Dispositif destiné à enregistrer des données de conduite et de déplacement de véhicules motorisés selon la revendication 1, **caractérisé par** la protection des enregistrements mémorisés dans la mémoire DRK de conducteur contre toute falsification éventuelle par la fourniture, pour chaque enregistrement, d'un code de contrôle d'authentification généré au moyen d'un code secret unique mémorisé à l'intérieur de la mémoire VHK de véhicule.

15. Dispositif destiné à enregistrer des données de conduite et de déplacement de véhicules motorisés selon la revendication 1, **caractérisé par le fait que** le fonctionnement du véhicule est activé ou désactivé par la comparaison bit par bit de deux codes correspondants, le premier code étant contenu dans la mémoire VHK de véhicule, le deuxième code étant contenu dans la mémoire DRK de conducteur et le fonctionnement du véhicule étant activé uniquement s'il existe des bits actifs communs dans les deux codes comparés.

16. Dispositif destiné à enregistrer des données de conduite et de déplacement de véhicules motorisés selon la revendication 1, **caractérisé par le fait que** le fonctionnement du véhicule est désactivé si le code de conducteur contenu dans la mémoire DRK de conducteur appartient à une liste noire de codes contenus à l'intérieur de la mémoire VHK de véhicule.

17. Dispositif destiné à enregistrer des données de conduite et de déplacement de véhicules motorisés selon la revendication 1, **caractérisé par le fait que**, dans une solution de mise en oeuvre en variante, les fonctions des deux modules, en l'occurrence le module principal et le module de cockpit, sont combinées dans un module.

18. Dispositif destiné à enregistrer des données de conduite et de déplacement de véhicules motorisés selon la revendication 1, **caractérisé par le fait que**, dans une solution de mise en oeuvre en variante, les fonctions du module de cockpit sont effectuées par un module qui échange des données avec le module principal au moyen dune connexion sans fil, la connexion étant mise en oeuvre au moyen d'une liaison de radiofréquences.

19. Dispositif destiné à enregistrer des données de conduite et de déplacement de véhicules motorisés selon la revendication 1, **caractérisé par le fait que**, dans une solution de mise en oeuvre en variante, les fonctions du module de cockpit sont effectuées par un module qui échange des données avec le module principal au moyen d'une connexion sans fil, la connexion étant mise en oeuvre au moyen d'une liaison optique.
